# EUROPEAN PATENT SPECIFICATION

(11) **EP 3 780 722 B1**
(45) Date of publication and mention of the grant of the patent: **03.09.2025**
(21) Application number: 19781134.2
(22) Date of filing: 28.03.2019
(51) Int. Cl.: H04L 5/00, H04W 28/06, H04W 80/02

(54) **MAC PDU TRANSMISSION METHOD AND APPARATUS**
MAC-PDU-ÜBERTRAGUNGSVERFAHREN UND -VORRICHTUNG
APPAREIL ET PROCÉDÉ DE TRANSMISSION PDU MAC

(30) Priority: 02.04.2018 CN 201810284406
(43) Date of publication of application: 17.02.2021
(73) Proprietor: China Mobile Communication Co., Ltd Research Institute, Beijing 100053 (CN); CHINA MOBILE COMMUNICATIONS GROUP CO., LTD, Beijing 100032 (CN)
(72) Inventor: SUN, Junshuai, Beijing 100032 (CN); WANG, Yingying, Beijing 100032 (CN); HUANG, Xueyan, Beijing 100032 (CN); HAN, Xingyu, Beijing 100032 (CN)
(74) Representative: Hertin und Partner Rechts- und Patentanwälte PartG mbB
(86) International application number: PCT/CN2019/080059
(87) International publication number: WO 2019/192379

(56) References cited:
- EP-A2- 2 584 714
- WO-A1-2017/086580
- CN-A- 104 936 226
- CN-A- 107 046 697
- CN-A- 107 360 591
- US-A1- 2016 301 513
- US-A1- 2016 308 713
- NOKIA ET AL: "MAC CEs definition for NR MIMO", vol. RAN WG2, no. Vancouver, Canada; 20180122 - 20180126, 12 January 2018 (2018-01-12), XP051386566, Retrieved from the Internet <URL:http://www.3gpp.org/ftp/tsg%5Fran/WG2%5FRL2/TSGR2%5FAHs/2018%5F01%5FNR/Docs/> [retrieved on 20180112]

## Description

### TECHNICAL FIELD

The present application relates to a communication field, in particular, relates to a Media Access Control (MAC) Protocol Data Unit (PDU) transmission method and a MAC PDU transmission apparatus.

### BACKGROUND

In a 5G system, a MAC control element (Control Element, CE) type is introduced to control switching of multiple input and multiple output (Multiple Input and Multiple Output, MIMO), beam management (Beam Management), etc. In a protocol in the related art, a MAC CE index uses a logical channel identity (logical channel identify, LCID).

The LCID has a length of 6 bits and can identify 64 MAC CE types and logical channels. Except the LCID values used to identify the logical channels in the protocol in the related art, dozens of LCID values are left for identifying the MAC CE types.

In the 5G system, more MAC CE types need to be introduced. However, a range of the LCID values used to identify the MAC CE types in the related art can no longer satisfy a system in which the 5G system expands the MAC CE types. Therefore, how to identify an expanded MAC CE type in the 5G system is a problem that needs to be solved.

A European Patent publication No. EP2584714A2 discloses a method for transmitting buffer status report from a user equipment in a wireless communication system and an apparatus therefor.

A U.S. patent publication No. US2016308713A1 discloses a method and a device for generating a MAC CE in a carrier aggregation system.

A 3GPP draft No. R2-1801088 provides a draft of MAC CEs definition for NR MIMO.

Further prior art can be found in US 2016/301513 A1.

### SUMMARY

Directed to the above problem, an objective of the present application is to provide a MAC PDU transmission method and a MAC PDU transmission apparatus for identifying an expanded MAC CE type in a MAC PDU. The present invention is defined in accompanying claims.

In the above embodiments of the present application, if the MAC PDU needs to contain an expanded type of MAC CE, then on one hand, the MAC CE expanded-type indication information is set in the MAC PDU subheader corresponding to the MAC CE, and is used to indicate that the MAC CE is an expanded type of MAC CE; on the other hand, a MAC CE type index is set in the MAC CE to indicate a specific expansion type of the MAC CE. It can be seen that through two levels of indication information (the first level of indication information is MAC CE expanded-type indication information, and the second level of indication information is a MAC CE type index), a specific type to which the expanded type of MAC CE belongs can be identified.

### BRIEF DESCRIPTION OF THE DRAWINGS

FIG.1a, FIG.1b and FIG. 1c are schematic diagrams of structures of MAC PDU subheaders corresponding to a MAC CE in related art respectively;
FIG. 2, FIG. 3, FIG. 4, and FIG. 5 are schematic diagrams of structures of MAC PDU subheaders corresponding to a MAC CE provided by the embodiments of present application;
FIG.6 is a schematic diagram of a structure of a MAC PDU subheader corresponding to a MAC CE in a related art provided by an embodiment of present application;
FIG. 7 is a schematic diagram of a structure of a MAC PDU subheader corresponding to a MAC CE according to an embodiment of present application;
FIG. 8 is a schematic flowchart of a MAC PDU transmission method provided by an embodiment of present application;
FIG. 9 is a schematic diagram of a MAC PDU transmission apparatus provided by an embodiment of present application;
FIG. 10 is a schematic diagram of a MAC PDU transmission apparatus provided by an embodiment of present application;
FIG. 11 is a schematic diagram of a structure of a network function entity provided by an embodiment of the present application;
FIG. 12 is a schematic diagram of a structure of a network function entity provided by an embodiment of the present application.

### DETAILED DESCRIPTION

A MAC layer in a long term evolution (Long Term Evolution, LTE) system is located between a radio link control (Radio Link Control, RLC) protocol layer and a physical layer (PHY) of a Uu interface.

A scheduling function in the LTE system is implemented at the MAC layer. An operation of the physical layer is scheduled and controlled through the MAC layer. A PDU is a protocol data unit of the MAC layer and is composed of character strings arranged in bytes (8 bits). A service data unit (Service Data Unit, SDU) is also called a service data unit, which is a data set of user services at a specified layer, and can be encapsulated and sent in MAC PDU. The MAC SDU is transferred to a lower layer protocol layer by a high layer protocol information unit.

A MAC PDU is composed of a MAC header, a MAC CE, a MAC SDU, and a possible padding. The number of MAC headers is 1; the number of MAC CEs is one or more than one or a MAC CE may not be included; the number of MAC SDUs is one or more than one, or a MAC SDU may not be included; the padding may be included or may not be included based on specific conditions. The length of the MAC header and the MAC SDU is variable.

The MAC CE is located ahead of all MAC SDUs, and the padding is located at the end of the MAC PDU.

A MAC header contains one or more MAC PDU subheaders, and each MAC PDU subheader corresponds to a MAC SDU or a MAC CE or a padding. An order of the MAC PDU subheaders is consistent with an order of corresponding MAC SDUs, corresponding MAC CEs, and corresponding paddings.

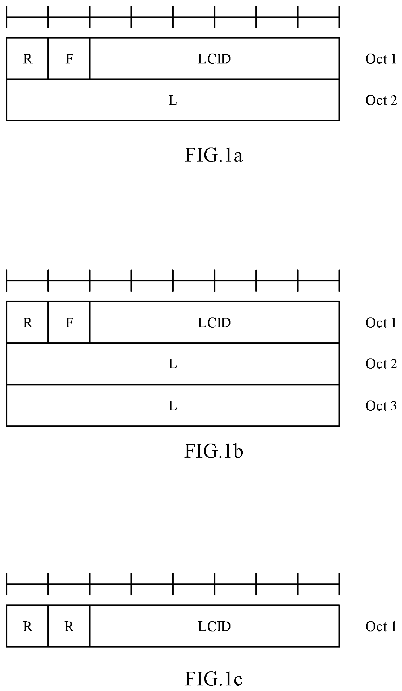

FIG. 1a shows a structure of a MAC PDU subheader corresponding to a MAC CE in the related art.

As shown in FIG. 1a, the MAC PDU subheader includes an R field, an F field, a LCID field and a 8-bit length (L) field, where:
- R field: reserved bits, the length of this field is 1 bit;
- F field: a format field, the length of this field is 1 bit, used to indicate a size of the length field L; if the length of a MAC CE variable in size is less than 128 bytes, then the value of the F field is set to 0, otherwise the value of the F field is set to 1.
- LCID: a logical channel identity, used to identify the type of the corresponding MAC CE; there is an LCID field in the corresponding MAC PDU subheader for each MAC CE.
- L: a length field, indicating a variable-size MAC CE length in bytes.

FIG. 1b shows another structure of the MAC PDU subheader corresponding to the MAC CE in the related art.

As shown in FIG. 1b, the MAC PDU subheader includes: the R field, the F field, the LCID field, and a 16-bit L field. A meaning of each field can be obtained by referring to relevant description of the MAC PDU subheader shown in FIG. 1a.

FIG. 1c shows another structure of the MAC PDU subheader corresponding to the MAC CE in the related art.

As shown in FIG. 1c, the MAC PDU subheader includes two R fields and an LCID field. A meaning of each field can be obtained by referring to relevant description of the MAC PDU subheader shown in FIG. 1a.

The MAC PDU can be mapped to a downlink shared channel (Downlink-Shared Channel, DL-SCH) or to an uplink shared channel (Uplink-Shared Channel, UL-SCH).

When the MAC PDU is mapped to the DL-SCH, a value of the LCID field in the MAC PDU subheader can be as shown in Table 1.

**Table 1: value of LCID of DL-SCH**

| Value of LCID | Description |
|---|---|
| 000000 | CCCH (common control channel) |
| 000001-100000 | Identity of the logical channel (logical channel identity) |
| 100001-110111 | Reserved (Reserved) |
| 111000 | Duplication Activation/Deactivation |
| | (Duplication Activation/Deactivation ) |
| 111001 | SCell Activation/Deactivation (4 octet) |
| | (SCell Activation/Deactivation) |
| 111010 | SCell Activation/Deactivation (1 octet) |
| | (SCell Activation/Deactivation) |
| 111011 | Long DRX Command |
| | (Long DRX Command) |
| 111100 | DRX Command (DRX Command) |
| 111101 | Timing Advance Command |
| | ( Timing Advance Command ) |
| 111110 | UE Contention Resolution Identity |
| | (UE Contention Resolution Identity) |
| 111111 | Padding (Padding) |

When the MAC PDU is mapped to an UL-SCH, a value of the LCID field in the MAC PDU subheader is shown in Table 2.

**Table 2: value of LCID of UL-SCH**

| Value of LCID | Description |
|---|---|
| 000000 | CCCH (common control channel) |
| 000001-100000 | Identity of the logical channel (logical channel identity) |
| 100001-110110 | Reserved (Reserved) |
| 110111 | Configured Grant Confirmation |
| | (Configured Grant Confirmation) |
| 111000 | Multiple Entry PHR (Multiple Entry PHR) |
| 111001 | Single Entry PHR ( Single Entry PHR) |
| 111010 | C-RNTI |
| 111011 | Short Truncated BSR (Short Truncated BSR) |
| 111100 | Long Truncated BSR (Long Truncated BSR) |
| 111101 | Short BSR |
| 111110 | Long BSR |
| 111111 | Padding (Padding) |

With enhancement in a MAC protocol sublayer function, a 5G system introduces a large number of new MAC CE types. In the MAC protocol in the related art, the LCID field is used to indicate the MAC CE types, as shown in Table 1 or Table 2 above. However, in the related art, a range of values of the LCID limits the number of MAC CE types, that is, the range of values of the LCID in the related art cannot identify a large number of new MAC CE types introduced by the 5G system.

In order to identify the expanded new MAC CE types to meet needs of future air-interface communication, an embodiment of the present application provides a MAC PDU transmission method.

In the embodiment of the present application, if the MAC PDU needs to contain an expanded type of MAC CE (that is, a new type of MAC CE), then on the one hand, MAC CE expanded-type indication information is set in the MAC PDU subheader corresponding to the MAC CE, and is used to indicate that the MAC CE is an expanded type of MAC CE; on the other hand, a MAC CE type index is set in the MAC CE to indicate a specific expanded type of the MAC CE. That is, through two levels of indication (a first level is the MAC CE expanded-type indication information, and a second level is the MAC CE type index), a specific type to which the expanded type of MAC CE belongs can be identified.

The embodiments of the present application will be described in detail below in conjunction with the drawings.

In the embodiment of the present application, for a MAC CE having the expanded type, the MAC CE expanded-type indication information needs to be set in the MAC PDU subheader, and is used to indicate that the MAC CE is the expanded type of MAC CE.

In order to improve compatibility with a protocol in the related art, optionally, in the embodiments of the present application, the MAC CE expanded-type indication information can be set in the MAC PDU subheader without changing a structure of the MAC PDU subheader in the related art.

Specifically, in a possible implementation manner, the MAC CE expanded-type indication information is carried in the LCID field in the MAC PDU subheader, and a value of the MAC CE expanded-type indication information is one value in a value range available for a MAC CE type identity, for example, can be a value in a reserved value range.

For example, if the MAC PDU is mapped to the DL-SCH for transmission, the value of the LCID in the MAC PDU subheader can be shown in Table 1. The value range of 100001-110111 is a reserved value range, and a value in this range can be defined as the value of the MAC CE expanded-type indication information. For example, 100001 in the reserved value range can be used as the value of the MAC CE expanded-type indication information, and the value of the LCID of the DL-SCH defined in this way can be shown in Table 3.

**Table 3: value of LCID of DL-SCH**

| Value of LCID | Description |
|---|---|
| 000000 | CCCH (common control channel) |
| 000001-100000 | Identity of the logical channel (logical channel idenity) |
| 100010-110111 | Reserved (Reserved) |
| 100001 | MAC CE expanded-type indication information |
| 111000 | Duplication Activation/Deactivation |
| | (Duplication Activation/Deactivation) |
| 111001 | SCell Activation/Deactivation (4 octet) |
| | (SCell Activation/Deactivation) |
| 111010 | SCell Activation/Deactivation (1 octet) |
| | (SCell Activation/Deactivation) |
| 111011 | Long DRX Command |
| | (Long DRX Command ) |
| 111100 | DRX Command (DRX Command) |
| 111101 | Timing Advance Command |
| | ( Timing Advance Command) |
| 111110 | UE Contention Resolution Identity |
| | (UE Contention Resolution Identity) |
| 111111 | Padding (Padding) |

As another example, if the MAC PDU is mapped to the UL-SCH for transmission, the value of the LCID in the MAC PDU subheader can be shown in Table 2. The value range of 100001-110110 is a reserved value range, and a value in this range can be defined as the value of the MAC CE expanded-type indication information. For example, 110110 in the reserved value range can be used as the value of the MAC CE expanded-type indication information, and the value of the LCID of UL-SCH defined in this way can be as shown in Table 4.

**Table 4: Value of LCID of UL-SCH**

| Index | Value of LCID |
|---|---|
| 000000 | CCCH (common control channel) |
| 000001-100000 | Identity of the logical channel (logical channel identity) |
| 100001-110101 | Reserved (Reserved) |
| 110110 | MAC CE expanded-type indication information |
| 110111 | Configured Grant Confirmation |
| | (Configured Grant Confirmation) |
| 111000 | Multiple Entry PHR (Multiple Entry PHR) |
| 111001 | Single Entry PHR ( Single Entry PHR) |
| 111010 | C-RNTI |
| 111011 | Short Truncated BSR ( Short Truncated BSR) |
| 111100 | Long Truncated BSR (Long Truncated BSR) |
| 111101 | Short BSR |
| 111110 | Long BSR |
| 111111 | Padding (Padding) |

Based on the above description, when an expanded type of MAC CE needs to be carried in a MAC PDU, the structure of the MAC PDU subheader corresponding to the MAC CE may be shown in FIG. 1a, FIG. 1b or FIG. 1c. The value of the LCID field is the value of the MAC CE expanded-type indication information defined in the embodiment of the present application.

It should be noted that a naming pattern of the above-mentioned "MAC CE expanded-type indication information" is only an example, the present application does not limit the naming pattern of the indication information, and indication information or identifier information that has the same function as that of the indication information is within the protection scope of the present application.

In order to indicate, in the MAC PDU, the specific type to which an expanded type of MAC CE belongs, in the embodiment of the present application, a field is added to the expanded type of MAC CE to indicate the specific type of the MAC CE.

In the embodiment of the present application, the newly added field is named "MAC CE type index". The above-mentioned naming pattern of the "MAC CE Type Index" is only an example, the present application does not limit the naming pattern of this information, and indication information or identification that has the same function as that the information is within the protection scope of the present application.

The MAC CE type index can uniquely indicate a MAC CE type (the MAC CE type is a new type, that is, an expanded type).

The length of the field of the MAC CE type index is N bytes, and N is an integer greater than or equal to 1, that is, an integer multiple of bytes, for example, can be 1 byte (8 bits) or 2 bytes (16 bits). The length of the field of the MAC CE type index may not be an integer multiple of bytes. The length can be expressed as (N × 8-M) bits, N is an integer greater than or equal to 1, M is an integer, 1≤M≤7, for example, N can be 7 bits or 15 bits. The length of the field of the MAC CE type index can be flexibly defined according to needs of the system.

Table 5 exemplarily shows a MAC CE expanded-type mapped to DL-SCH.

**Table 5: MAC CE expanded-type of DL-SCH**

| Type index | Type description |
|---|---|
| 0000000 | Type 0 |
| 0000001 | Type 1 |
| | |
| 1111111 | Type n |

Table 6 exemplarily shows a MAC CE expanded-type mapped to UL-SCH.

**Table 6: MAC CE expanded-type of UL-SCH**

| Type index | Type description |
|---|---|
| 0000000 | Type 0 |
| 0000001 | Type 1 |
| | |
| 1111111 | Type n |

In the embodiment of the present application, the expanded type of MAC CE may include the following two basic components (1) and (2).
(1) content of MAC CE, that is, the content of specific control information;
(2) MAC CE type index.

If the length of the field of MAC CE type index in the expanded type of MAC CE is not a length having an integer multiple of bytes, then based on the above basic components, the expanded type of MAC CE may also include length-expansion indication information which can occupy one or more bits and is used to indicate whether the length of the MAC CE type index has been expanded.

It should be noted that an order of three possible components of the MAC CE in the MAC CE can be flexibly defined, which is not specifically limited in the present application.

It should be noted that the naming pattern of the above-mentioned "length-expansion indication information" is only an example, and the present application does not limit the naming pattern of the indication information. Indication information or identifier information that has the same function as that of the indication information is within the protection scope of the present application.

For example, the length-expansion indication information occupies 1 bit. When the value of the length-expansion indication information is 0, the "0" value indicates that the length of the MAC CE type index is not expanded, that is, the length of the MAC CE type index is 7 bits; when the value of the length-expansion indication information is 1, the "1" value indicates that the length of the MAC CE type index has been expanded, that is, the length of the MAC CE type index is 15 bits.

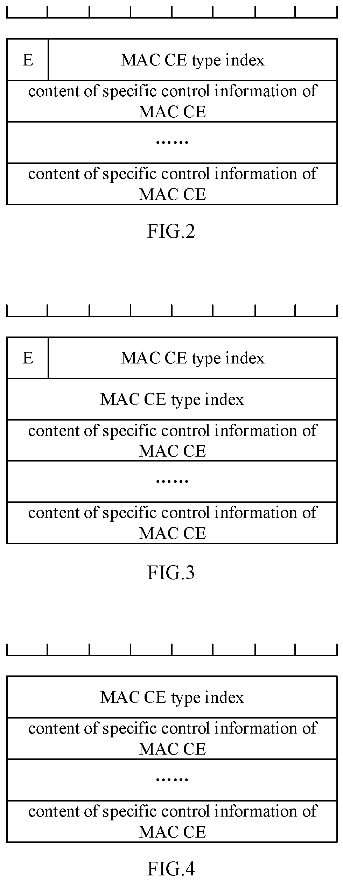

FIG. 2 exemplarily shows a structure of an expanded type of MAC CE, and a length of the MAC CE type index is 7 bits. As shown in FIG. 2, the MAC CE may include following:
E field: length-expansion indication information, the length of the E field is 1 bit, and the value of the field is 0, which is used to indicate that the length of the MAC CE type index is not expanded;
MAC CE type index: 7 bits in length;
content of specific control information of MAC CE.

FIG. 3 exemplarily shows a structure of an expanded type of MAC CE, and the length of the MAC CE type index is 15 bits. As shown in FIG. 3, the MAC CE may include following.
E field: length-expansion indication information, the length is 1 bit, and the value of the field is 1, the field is used to indicate that the length of the MAC CE type index has been expanded;
MAC CE type index: 15 bits in length;
content of specific control information of MAC CE.

FIG. 4 exemplarily shows a structure of an expanded type of MAC CE, and the length of the MAC CE type index is 8 bits. As shown in FIG. 4, the MAC CE may include following.
MAC CE type index: the length of the MAC CE type index is 8 bits;
content of specific control information of MAC CE.

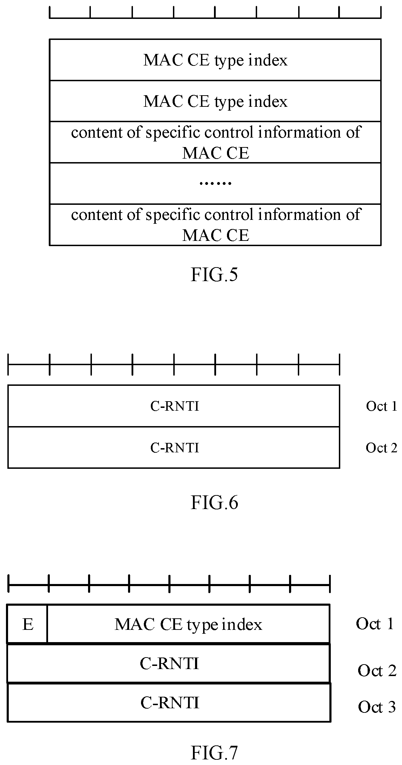

FIG. 5 exemplarily shows the structure of an expanded type of MAC CE, and the length of the MAC CE type index is 16 bits. As shown in FIG. 5, the MAC CE may include following.
MAC CE type index: the length of the MAC CE type index is 16 bits;
content of specific control information of MAC CE.

In another possible implementation, a C-RNTI CE format in a protocol is shown in FIG. 6. FIG. 7 shows a format of an expanded type of MAC CE with a 7-bit MAC CE type index. By combining FIG. 6 with FIG. 7, it can be seen that the method provided by the embodiment of the present application can realize expansion of a MAC CE type.

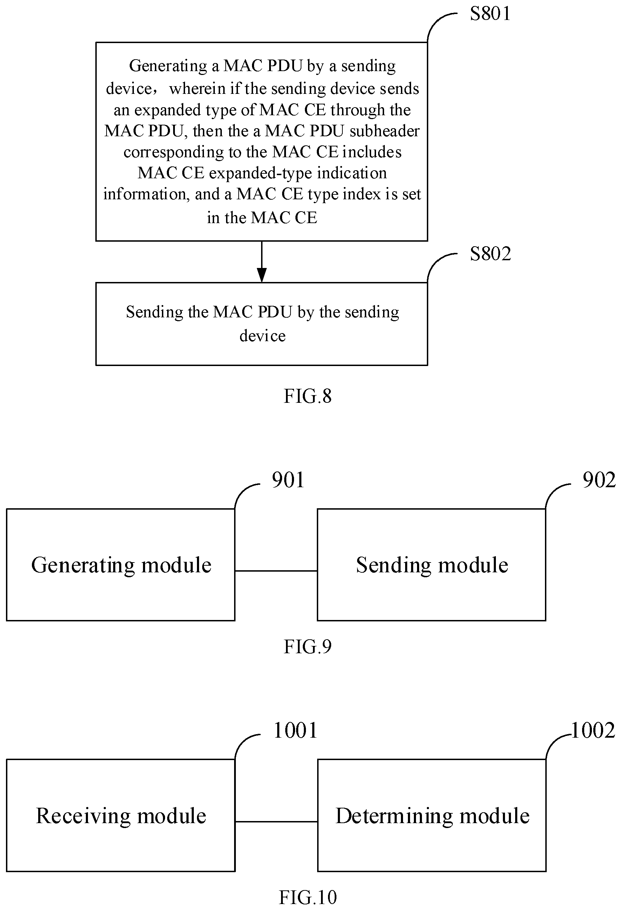

Based on the foregoing embodiment, an embodiment of the present application provides a MAC PDU transmission method on a sending device side, as shown in FIG. 8, the method includes steps 801-802.

S801: generating a MAC PDU by a sending device.

If the sending device needs to send an expanded type of MAC CE through the MAC PDU, the MAC PDU subheader corresponding to the MAC CE includes MAC CE expanded-type indication information for indicating that the corresponding MAC CE is an expanded type of MAC CE, and the MAC CE type index is set in the MAC CE and is used to indicate an expansion type described by the MAC CE.

Specific implementation of this step is described in the foregoing embodiments, which will not be repeated here.

S802: sending the MAC PDU by the sending device.

An embodiment of the present application also provides a MAC PDU transmission method on a receiving device side, the method includes steps S803-S804.

S803: receiving, by the receiving device, a MAC PDU sent by the sending device.

S804: determining the type of a MAC CE by the receiving device according to the MAC CE expanded-type indication information and the MAC CE type index.

It should be noted that, in the embodiments of the present application, when the MAC PDU is mapped to an uplink shared channel for transmission, the "sending device" may be a "terminal", the "receiving device" may be a "base station"; when the MAC PDU is mapped to a downlink shared channel for transmission, the "sending device" may be the "base station" and the "receiving device" may be the "terminal".

Based on the same technical concept, an embodiment of the present application also provides a MAC PDU transmission apparatus. Referring to FIG. 9, the apparatus provided in the embodiment of the present application includes a generating module 901 and a sending module 902.

The generating module 901 is configured to generate a MAC PDU by a sending device. The MAC PDU includes N media access control control elements (MAC CE) and N MAC PDU subheaders corresponding to the N MAC CEs in a one-to-one manner. At least one MAC PDU subheader in the N MAC PDU subheaders includes MAC CE expanded-type indication information used to indicate that the corresponding MAC CE is an expanded type of MAC CE, and the MAC PDU subheader that contains the MAC CE expanded-type indication information corresponds to the MAC CE including a MAC CE type index, the MAC CE type index is used to indicate an expansion type to which the MAC CE belongs, and N is an integer greater than or equal to 1.

The sending module 902 is configured to send the MAC PDU by the sending device.

Based on the same technical concept, an embodiment of the present application also provides a MAC PDU transmission apparatus. Referring to FIG. 10, the apparatus provided in the embodiment of the present application includes a receiving module 1001 and a determining module 1002.

The receiving module 1001 is configured to generate a MAC PDU by a receiving device. The MAC PDU includes N media access control control elements (MAC CE) and N MAC PDU subheaders corresponding to the N MAC CEs in a one-to-one manner. At least one MAC PDU subheader in the N MAC PDU subheaders includes MAC CE expanded-type indication information used to indicate that the corresponding MAC CE is an expanded type of MAC CE, and the MAC PDU subheader that contains the MAC CE expanded-type indication information corresponds to the MAC CE including a MAC CE type index, the MAC CE type index is used to indicate an expansion type to which the MAC CE belongs, and N is an integer greater than or equal to 1.

The determining module 1002 is configured to determine the type of the MAC CE by the receiving device according to the MAC CE expanded-type indication information and the MAC CE type index.

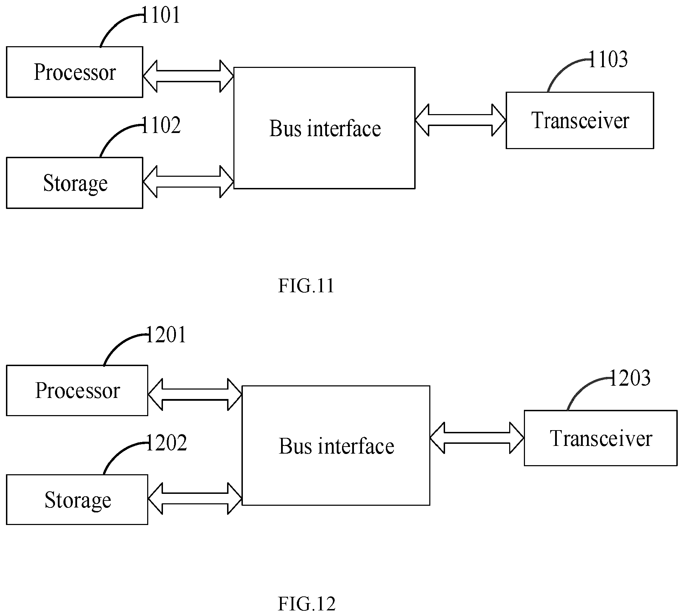

Based on the same technical concept, an embodiment not covered by the claims of the present application further provides an apparatus, as shown in FIG. 11, the apparatus includes a processor 1101, a storage 1102, a transceiver 1103, and a bus interface. The apparatus can implement an object processing procedure described in the foregoing embodiments.

The processor 1101 is responsible for managing a bus architecture and general processing, and the storage 1102 can store data used by the processor 1101 when performing an operations. The transceiver 1103 is used to receive and send data under the control of the processor 1101.

The bus architecture may include any number of interconnected buses and bridges. Specifically, various circuits such as one or more processors represented by the processor 1101 and a storage represented by the storage 1102 are linked together. The bus architecture can also link various other circuits such as peripheral devices, voltage regulators, power management circuits, etc., which are all known in the art, and therefore, no further description thereof is provided herein. A bus interface provides the interface. The processor 1101 is responsible for managing the bus architecture and general processing, and the storage 1102 can store data used by the processor 1101 when performing operations.

The processes disclosed in the embodiments of the present disclosure may be applied to the processor 1101 or implemented by the processor 1101. In the implementation process, each step of a signal processing flow can be completed by integrated logic circuits of hardware in the processor 1101 or instructions in a form of software. The processor 1101 may be a general-purpose processor, a digital signal processor, an application specific integrated circuit, a field programmable gate array or other programmable logic device, a discrete gate or transistor logic device, a discrete hardware component, and may implement or execute the methods, steps and logic block diagrams disclosed in the embodiments of the present disclosure. The general-purpose processor may be a microprocessor or any conventional processor. The steps of the method disclosed in the embodiments of the present disclosure may be directly embodied as being executed and completed by a hardware processor, or executed and completed by a combination of hardware and software modules in the processor. A software module can be located in a storage medium mature in the field such as a random access memory, a flash memory, a read-only memory, a programmable read-only memory, or an electrically erasable programmable memory, registers, etc. The storage medium is located in the storage 1102, and the processor 1101 reads information in the storage 1102, and completes the steps of a signal processing flow in combination with hardware of the processor 1101.

Specifically, the processor 1101 is configured to read a program in the storage 1102 and execute processes executed by an access network node described in the foregoing embodiments.

Based on the same technical concept, an embodiment not covered by the claims of the present application also provides an apparatus, as shown in FIG. 12. The apparatus includes a processor 1201, a storage 1202, a transceiver 1203, and a bus interface. The apparatus can implement an object processing procedure described in the foregoing embodiments.

The processor 1201 is responsible for managing a bus architecture and general processing, and the storage 1202 can store data used by the processor 1201 when performing an operations. The transceiver 1203 is used to receive and send data under the control of the processor 1201.

The bus architecture may include any number of interconnected buses and bridges. Specifically, various circuits such as one or more processors represented by the processor 1201 and a storage represented by the storage 1202 are linked together. The bus architecture can also link various other circuits such as peripheral devices, voltage regulators, power management circuits, etc., which are all known in the art, and therefore, no further description thereof is provided herein. A bus interface provides the interface. The processor 1201 is responsible for managing the bus architecture and general processing, and the storage 1202 can store data used by the processor 1201 when performing operations.

The flows disclosed in the embodiments of the present disclosure may be applied to the processor 1201 or implemented by the processor 1201. In the implementation process, each step of a signal processing flow can be completed by integrated logic circuits of hardware in the processor 1201 or instructions in a form of software. The processor 1201 may be a general-purpose processor, a digital signal processor, an application specific integrated circuit, a field programmable gate array or other programmable logic device, a discrete gate or transistor logic device, a discrete hardware component, and may implement or execute the methods, steps and logic block diagrams disclosed in the embodiments of the present disclosure. The general-purpose processor may be a microprocessor or any conventional processor. The steps of the method disclosed in the embodiments of the present disclosure may be directly embodied as being executed and completed by a hardware processor, or executed and completed by a combination of hardware and software modules in the processor. A software module can be located in a storage medium mature in the field such as a random access memory, a flash memory, a read-only memory, a programmable read-only memory, or an electrically erasable programmable memory, registers, etc. The storage medium is located in the storage 1202, and the processor 1201 reads information in the storage 1202, and completes the steps of a signal processing flow in combination with hardware of the processor 1201.

Specifically, the processor 1201 is configured to read a program in the storage 1202 and execute processes executed by an access network node described in the foregoing embodiments.

Based on the same technical concept, the embodiments not covered by the claims of the present application also provide one or more computer-readable storage media, on which instructions are stored, wherein when the instructions are executed by one or more processors, a communication device is caused to execute the method described in the foregoing embodiments.

Based on the same technical concept, an embodiment not covered by the claims of the present application also provides a computer-readable storage medium storing computer-executable instructions. The computer-executable instructions are used to cause one or more processors to execute the method described in the foregoing embodiments.

The present application is described with reference to flowcharts and/or block diagrams of methods, devices (systems), and computer program products according to embodiments of the present application. It should be understood that each flow and/or each block in a flowchart and/or a block diagram, and a combination of flows and/or blocks in the flowchart and/or the block diagram can be realized by computer program instructions. These computer program instructions can be provided to a processor of a general-purpose computer, a special-purpose computer, an embedded processor, or other programmable data processing devices to generate a machine, so that instructions, when being executed by a processor of a computer or other programmable data processing device, can generate a device used to realize a functions specified in one or more flows in a flowchart and/or one or more blocks in a block diagram.

These computer program instructions can also be stored in a computer-readable memory that can guide a computer or other programmable data processing devices to work in a specific manner, so that the instructions stored in the computer-readable memory produce an article of manufacture including an instruction apparatus. The apparatus implements the functions specified in one or more flows in a flowchart and/or one or more blocks in a block diagram.

These computer program instructions can also be loaded on a computer or other programmable data processing device, so that a series of operations and steps are executed on the computer or other programmable device to produce a computer-implemented processing, so that instructions, when being executed a computer or other programmable device, can provide steps used for implementing functions specified in one or more flows in a flowchart and/or one or more blocks in a block diagram.

## Claims

1. A media access control protocol data unit, MAC PDU, transmission method, comprising:
generating (S801) a MAC PDU by a sending device, wherein the MAC PDU comprises N media access control control elements, MAC CE, and N MAC PDU subheaders corresponding to the N MAC CEs in a one-to-one manner; and,
sending (S802) the MAC PDU by the sending device,
wherein
at least one MAC PDU subheader in the N MAC PDU subheaders comprises MAC CE expanded-type indication information used to indicate that a corresponding MAC CE is an expanded type of MAC CE, and a MAC CE corresponding to the MAC PDU subheader containing the MAC CE expanded-type indication information comprises an MAC CE type index used to indicate an expansion type to which the MAC CE belongs, and N is an integer greater than or equal to 1, the MAC CE type index uniquely indicates a MAC CE type,
the expanded type is a new MAC CE type a Fifth Generation communication system, other than MAC CE types in a Long Term Evolution system, wherein the MAC CE expanded-type indication information is carried in a logical channel identity, LCID, field in the MAC PDU subheader, and a value of the MAC CE expanded-type indication information is an available value in a value range of a MAC CE type identity.

2. The method according to claim 1, wherein a length of the MAC CE type index is N bytes, and N is an integer greater than or equal to 1; or,
a length of the MAC CE type index is (N × 8-M) bits in N bytes, N is an integer greater than or equal to 1, M is an integer, and 1≤M≤7.

3. The method according to claim 2, wherein if the MAC CE type index is (N×8-M) bits in N bytes, the MAC CE type index comprises length-expansion indication information,
the length-expansion indication information occupies at least one of remaining bits of the N bytes, and the length-expansion indication information is used to indicate whether a length of the MAC CE type index is expanded.

4. The method according to any one of claims 1 to 3, wherein the MAC PDU is mapped to a downlink shared channel for transmission, or mapped to an uplink shared channel for transmission.

5. A media access control protocol data unit, MAC PDU, transmission method, comprising:
receiving (S803) a MAC PDU by a receiving device, wherein the MAC PDU comprises N media access control control elements, MAC CE, and N MAC PDU subheaders corresponding to the N MAC CEs in a one-to-one manner,
wherein
at least one MAC PDU subheader in the N MAC PDU subheaders comprises MAC CE expanded-type indication information used to indicate that a corresponding MAC CE is an expanded type of MAC CE, and a MAC CE corresponding to the MAC PDU subheader containing the MAC CE expanded-type indication information comprises an MAC CE type index used to indicate an expansion type to which the MAC CE belongs, and N is an integer greater than or equal to 1, the MAC CE type index uniquely indicates a MAC CE type;
the method further comprises:
determining (S804) a type of the MAC CE by the receiving device according to the MAC CE expanded-type indication information and the MAC CE type index,
wherein the expanded type is a new MAC CE type a Fifth Generation communication system, other than MAC CE types in a Long Term Evolution system,
wherein the MAC CE expanded-type indication information is carried in a logical channel identity, LCID, field in the MAC PDU subheader, and a value of the MAC CE expanded-type indication information is an available value in a value range of a MAC CE type identity.

6. The method according to claim 5, wherein a length of the MAC CE type index is N bytes, and N is an integer greater than or equal to 1; or,
a length of the MAC CE type index is (N × 8-M) bits in N bytes, N is an integer greater than or equal to 1, M is an integer, and 1≤M≤7.

7. The method according to claim 6, wherein if the MAC CE type index is (N×8-M) bits in N bytes, the MAC CE type index comprises length-expansion indication information,
the length-expansion indication information occupies at least one of remaining bits of the N bytes, and the length-expansion indication information is used to indicate whether a length of the MAC CE type index is expanded.

8. The method according to any one of claims 5 to 7, wherein the MAC PDU is mapped to a downlink shared channel for transmission, or mapped to an uplink shared channel for transmission.

9. A media access control protocol data unit, MAC PDU, transmission apparatus, comprising:
a generating module (901), configured to generate a MAC PDU by a sending device, wherein the MAC PDU comprises N media access control control elements, MAC CE, and N MAC PDU subheaders corresponding to the N MAC CEs in a one-to-one manner; and,
a sending module (902), configured to send the MAC PDU by the sending device,
wherein
at least one MAC PDU subheader in the N MAC PDU subheaders comprises MAC CE expanded-type indication information used to indicate that a corresponding MAC CE is an expanded type of MAC CE, and a MAC CE corresponding to the MAC PDU subheader containing the MAC CE expanded-type indication information comprises an MAC CE type index used to indicate an expansion type to which the MAC CE belongs, and N is an integer greater than or equal to 1, the MAC CE type index uniquely indicates a MAC CE type,
the expanded type is a new MAC CE type a Fifth Generation communication system, other than MAC CE types in a Long Term Evolution system,
wherein the MAC CE expanded-type indication information is carried in a logical channel identity, LCID, field in the MAC PDU subheader, and a value of the MAC CE expanded-type indication information is an available value in a value range of a MAC CE type identity.

10. The apparatus according to claim 9, wherein a length of the MAC CE type index is N bytes, and N is an integer greater than or equal to 1; or,
a length of the MAC CE type index is (N × 8-M) bits in N bytes, N is an integer greater than or equal to 1, M is an integer, and 1≤M≤7.

11. The apparatus according to claim 10, wherein if the MAC CE type index is (N×8-M) bits in N bytes, the MAC CE type index comprises length-expansion indication information,
the length-expansion indication information occupies at least one of remaining bits of the N bytes, and the length-expansion indication information is used to indicate whether a length of the MAC CE type index is expanded.

12. A media access control protocol data unit, MAC PDU, transmission apparatus, comprising:
a receiving module (1001), configured to receive a MAC PDU by a receiving device, wherein the MAC PDU comprises N media access control control elements, MAC CE, and N MAC PDU subheaders corresponding to the N MAC CEs in a one-to-one manner,
wherein
at least one MAC PDU subheader in the N MAC PDU subheaders comprises MAC CE expanded-type indication information used to indicate that a corresponding MAC CE is an expanded type of MAC CE, and a MAC CE corresponding to the MAC PDU subheader containing the MAC CE expanded-type indication information comprises an MAC CE type index used to indicate an expansion type to which the MAC CE belongs, and N is an integer greater than or equal to 1, the MAC CE type index uniquely indicates a MAC CE type;
the method further comprises:
a determining module (1002), configured to determine a type of the MAC CE by the receiving device according to the MAC CE expanded-type indication information and the MAC CE type index,
the expanded type is a new MAC CE type a Fifth Generation communication system, other than MAC CE types in a Long Term Evolution system,
wherein the MAC CE expanded-type indication information is carried in a logical channel identity, LCID, field in the MAC PDU subheader, and a value of the MAC CE expanded-type indication information is an available value in a value range of a MAC CE type identity.

## Patentansprüche

1. Übertragungsverfahren für eine Medienzugriffssteuerungsprotokolldateneinheit, MAC PDU, umfassend:
Erzeugen (S801) einer MAC PDU durch eine Sendevorrichtung, wobei die MAC PDU N Medienzugriffssteuerungselemente, MAC CE, und N MAC-PDU-Subheader, die den N MAC CEs entsprechen, in einer Eins-zu-Eins-Weise umfasst; und
Senden (S802) der MAC-PDU durch die Sendevorrichtung, wobei
mindestens ein MAC-PDU-Subheader in den N MAC-PDU-Subheadern MAC-CE-Anzeigeinformationen von dem erweiterten Typ umfasst, die verwendet werden, um anzuzeigen, dass ein entsprechendes MAC-CE ein erweiterter Typ von MAC-CE ist, und ein dem MAC-PDU-Subheader entsprechender MAC-CE, der die MAC-CE-Anzeigeinformationen von dem erweiterten Typ enthält, einen MAC-CE-Typindex umfasst, der verwendet wird, um einen Erweiterungstyp anzuzeigen, zu dem das MAC-CE gehört, und N eine ganze Zahl größer oder gleich 1 ist, wobei der MAC-CE-Typindex eindeutig einen MAC-CE-Typ anzeigt,
der erweiterte Typ ein neuer MAC-CE-Typ eines Kommunikationssystems der fünften Generation ist, der sich von MAC-CE-Typen in einem Long-Term-Evolution-System unterscheidet,
wobei die MAC-CE-Anzeigeinformationen des erweiterten Typs in einem LCID-(Logical Channel Identity-)Feld in dem MAC-PDU-Subheader übertragen werden und ein Wert der MAC-CE-Anzeigeinformationen des erweiterten Typs ein verfügbarer Wert in einem Wertebereich einer MAC-CE-Typidentität ist.

2. Verfahren nach Anspruch 1, wobei eine Länge des MAC-CE-Typindex N Bytes ist und N eine ganze Zahl größer oder gleich 1 ist; oder
eine Länge des MAC-CE-Typindex (N × 8-M) Bits in N Bytes ist, N eine ganze Zahl größer oder gleich 1 ist, M eine ganze Zahl und 1≤M≤7 ist.

3. Verfahren nach Anspruch 2, wobei, wenn der MAC-CE-Typindex (N×8-M) Bits in N Bytes ist, der MAC-CE-Typindex Längenexpansions-Anzeigeinformationen umfasst,
die Längenerweiterungs-Anzeigeinformationen mindestens eines der verbleibenden Bits der N Bytes belegen, und die Längenerweiterungs-Anzeigeinformationen verwendet werden, um anzuzeigen, ob eine Länge des MAC-CE-Typindex erweitert ist.

4. Verfahren nach einem der Ansprüche 1 bis 3, wobei die MAC-PDU einem gemeinsam genutzten Downlink-Kanal zur Übertragung zugeordnet wird oder einem gemeinsam genutzten Uplink-Kanal zur Übertragung zugeordnet wird.

5. Übertragungsverfahren für eine Medienzugriffssteuerungsprotokolldateneinheit, MAC PDU, umfassend:
Empfangen (S803) einer MAC PDU durch eine Empfängervorrichtung, wobei die MAC PDU N Medienzugriffssteuerungselemente, MAC CE, und N MAC-PDU-Subheader, die den N MAC CEs entsprechen, in einer Eins-zu-Eins-Weise umfasst, wobei
mindestens ein MAC-PDU-Subheader in den N MAC-PDU-Subheadern MAC-CE-Anzeigeinformationen von dem erweiterten Typ umfasst, die verwendet werden, um anzuzeigen, dass ein entsprechendes MAC-CE ein erweiterter Typ von MAC-CE ist, und ein dem MAC-PDU-Subheader entsprechender MAC-CE, der die MAC-CE-Anzeigeinformationen von dem erweiterten Typ enthält, einen MAC-CE-Typindex umfasst, der verwendet wird, um einen Erweiterungstyp anzuzeigen, zu dem das MAC-CE gehört, und N eine ganze Zahl größer oder gleich 1 ist, wobei der MAC-CE-Typindex eindeutig einen MAC-CE-Typ anzeigt;
das Verfahren ferner umfassend:
Bestimmen (S804) eines Typs des MAC CE durch die Empfängervorrichtung gemäß den MAC-CE-Anzeigeinformationen des erweiterten Typs und den MAC-CE-Typindex,
wobei der erweiterte Typ ein neuer MAC-CE-Typ eines Kommunikationssystems der fünften Generation ist, der sich von MAC-CE-Typen in einem Long-Term-Evolution-System unterscheidet,
wobei die MAC-CE-Anzeigeinformationen des erweiterten Typs in einem LCID-(Logical Channel Identity-)Feld in dem MAC-PDU-Subheader übertragen werden und ein Wert der MAC-CE-Anzeigeinformationen des erweiterten Typs ein verfügbarer Wert in einem Wertebereich einer MAC-CE-Typidentität ist.

6. Verfahren nach Anspruch 5, wobei eine Länge des MAC-CE-Typindex N Bytes ist und N eine ganze Zahl größer oder gleich 1 ist; oder
eine Länge des MAC-CE-Typindex (N × 8-M) Bits in N Bytes ist, N eine ganze Zahl größer oder gleich 1 ist, M eine ganze Zahl und 1≤M≤7 ist.

7. Verfahren nach Anspruch 6, wobei, wenn der MAC-CE-Typindex (N×8-M) Bits in N Bytes ist, der MAC-CE-Typindex Längenexpansions-Anzeigeinformationen umfasst,
die Längenerweiterungs-Anzeigeinformationen mindestens eines der verbleibenden Bits der N Bytes belegen, und die Längenerweiterungs-Anzeigeinformationen verwendet werden, um anzuzeigen, ob eine Länge des MAC-CE-Typindex erweitert ist.

8. Verfahren nach einem der Ansprüche 5 bis 7, wobei die MAC-PDU einem gemeinsam genutzten Downlink-Kanal zur Übertragung zugeordnet wird oder einem gemeinsam genutzten Uplink-Kanal zur Übertragung zugeordnet wird.

9. Übertragungsvorrichtung für eine Medienzugriffssteuerungsprotokolldateneinheit, MAC PDU, umfassend:
ein Erzeugungsmodul (901), das konfiguriert ist, um eine MAC PDU durch eine Sendevorrichtung zu erzeugen, wobei die MAC PDU N Medienzugriffssteuerungselemente, MAC CE, und N MAC-PDU-Subheader, die den N MAC CEs entsprechen, in einer Eins-zu-Eins-Weise umfasst; und
ein Sendemodul (902), das konfiguriert ist, um die MAC-PDU durch die Sendevorrichtung zu senden, wobei
mindestens ein MAC-PDU-Subheader in den N MAC-PDU-Subheadern MAC-CE-Anzeigeinformationen von dem erweiterten Typ umfasst, die verwendet werden, um anzuzeigen, dass ein entsprechendes MAC-CE ein erweiterter Typ von MAC-CE ist, und ein dem MAC-PDU-Subheader entsprechender MAC-CE, der die MAC-CE-Anzeigeinformationen von dem erweiterten Typ enthält, einen MAC-CE-Typindex umfasst, der verwendet wird, um einen Erweiterungstyp anzuzeigen, zu dem das MAC-CE gehört, und N eine ganze Zahl größer oder gleich 1 ist, wobei der MAC-CE-Typindex eindeutig einen MAC-CE-Typ anzeigt,
der erweiterte Typ ein neuer MAC-CE-Typ eines Kommunikationssystems der fünften Generation ist, der sich von MAC-CE-Typen in einem Long-Term-Evolution-System unterscheidet,
wobei die MAC-CE-Anzeigeinformationen des erweiterten Typs in einem LCID-(Logical Channel Identity-)Feld in dem MAC-PDU-Subheader übertragen werden und ein Wert der MAC-CE-Anzeigeinformationen des erweiterten Typs ein verfügbarer Wert in einem Wertebereich einer MAC-CE-Typidentität ist.

10. Vorrichtung nach Anspruch 9, wobei eine Länge des MAC-CE-Typindex N Bytes ist und N eine ganze Zahl größer oder gleich 1 ist; oder
eine Länge des MAC-CE-Typindex (N × 8-M) Bits in N Bytes ist, N eine ganze Zahl größer oder gleich 1 ist, M eine ganze Zahl und 1≤M≤7 ist.

11. Vorrichtung nach Anspruch 10, wobei, wenn der MAC-CE-Typindex (N×8-M) Bits in N Bytes ist, der MAC-CE-Typindex Längenexpansions-Anzeigeinformationen umfasst,
die Längenerweiterungs-Anzeigeinformationen mindestens eines der verbleibenden Bits der N Bytes belegen, und die Längenerweiterungs-Anzeigeinformationen verwendet werden, um anzuzeigen, ob eine Länge des MAC-CE-Typindex erweitert ist.

12. Übertragungsvorrichtung für eine Medienzugriffssteuerungsprotokolldateneinheit, MAC PDU, umfassend:
ein Empfängermodul (1001), das konfiguriert ist, um eine MAC PDU durch eine Empfängervorrichtung zu empfangen, wobei die MAC PDU N Medienzugriffssteuerungselemente, MAC CE, und N MAC-PDU-Subheader, die den N MAC CEs entsprechen, in einer Eins-zu-Eins-Weise umfasst, wobei
mindestens ein MAC-PDU-Subheader in den N MAC-PDU-Subheadern MAC-CE-Anzeigeinformationen von dem erweiterten Typ umfasst, die verwendet werden, um anzuzeigen, dass ein entsprechendes MAC-CE ein erweiterter Typ von MAC-CE ist, und ein dem MAC-PDU-Subheader entsprechender MAC-CE, der die MAC-CE-Anzeigeinformationen von dem erweiterten Typ enthält, einen MAC-CE-Typindex umfasst, der verwendet wird, um einen Erweiterungstyp anzuzeigen, zu dem das MAC-CE gehört, und N eine ganze Zahl größer oder gleich 1 ist, wobei der MAC-CE-Typindex eindeutig einen MAC-CE-Typ anzeigt;
das Verfahren ferner umfassend:
ein Bestimmungsmodul (1002), das konfiguriert ist, um einen Typ des MAC CE durch die Empfängervorrichtung gemäß der MAC-CE-Anzeigeinformationen des erweiterten Typs und den MAC-CE-Typindex,
der erweiterte Typ ein neuer MAC-CE-Typ eines Kommunikationssystems der fünften Generation ist, der sich von MAC-CE-Typen in einem Long-Term-Evolution-System unterscheidet,
wobei die MAC-CE-Anzeigeinformationen des erweiterten Typs in einem LCID-(Logical Channel Identity-)Feld in dem MAC-PDU-Subheader übertragen werden und ein Wert der MAC-CE-Anzeigeinformationen des erweiterten Typs ein verfügbarer Wert in einem Wertebereich einer MAC-CE-Typidentität ist.

## Revendications

1. Procédé de transmission d'une unité de données de protocole de contrôle d'accès au support (MAC PDU), comprenant :
la génération (S801) d'une PDU MAC par un dispositif d'envoi, dans lequel la PDU MAC comprend N éléments de contrôle d'accès au support, MAC CE, et N sous-en-têtes PDU MAC correspondant aux N MAC CE de manière biunivoque ; et,
l'envoi (S802) de la MAC PDU par le dispositif d'envoi, dans lequel
au moins un sous-en-tête MAC PDU dans les N sous-en-têtes MAC PDU comprend des informations d'indication de type étendu MAC CE utilisées pour indiquer qu'un MAC CE correspondant est un type étendu de MAC CE, et un MAC CE correspondant au sous-en-tête MAC PDU contenant les informations d'indication de type étendu MAC CE comprend un index de type MAC CE utilisé pour indiquer un type d'extension auquel appartient le MAC CE, et N est un entier supérieur ou égal à 1, l'index de type MAC CE indique de manière unique un type MAC CE,
le type étendu est un nouveau type MAC CE d'un système de communication de cinquième génération, autre que les types MAC CE dans un système d'évolution à long terme, dans lequel les informations d'indication de type étendu MAC CE sont transportées dans un champ d'identité de canal logique, LCID, dans le sous-en-tête MAC PDU, et une valeur des informations d'indication de type étendu MAC CE est une valeur disponible dans une plage de valeurs d'une identité de type MAC CE.

2. Procédé selon la revendication 1, dans lequel la longueur de l'index de type MAC CE est de N octets, et N est un entier supérieur ou égal à 1 ; ou,
la longueur de l'index de type MAC CE est (N × 8-M) bits dans N octets, N est un entier supérieur ou égal à 1, M est un entier et 1≤M≤7.

3. Procédé selon la revendication 2, dans lequel, si l'index de type MAC CE est de (N×8-M) bits dans N octets, l'index de type MAC CE comprend des informations d'indication d'extension de longueur,
les informations d'indication d'extension de longueur occupent au moins un des bits restants des N octets, et les informations d'indication d'extension de longueur sont utilisées pour indiquer si une longueur de l'index de type MAC CE est étendue.

4. Procédé selon l'une quelconque des revendications 1 à 3, dans lequel la MAC PDU est mappée sur un canal partagé de liaison descendante pour la transmission, ou mappée sur un canal partagé de liaison montante pour la transmission.

5. Procédé de transmission d'une unité de données de protocole de contrôle d'accès au support (MAC PDU), comprenant :
la réception (S803) d'une PDU MAC par un dispositif de réception, dans lequel la PDU MAC comprend N éléments de contrôle d'accès au support, MAC CE, et N sous-en-têtes PDU MAC correspondant aux N MAC CE de manière biunivoque, dans lequel
au moins un sous-en-tête MAC PDU dans les N sous-en-têtes MAC PDU comprend des informations d'indication de type étendu MAC CE utilisées pour indiquer qu'un MAC CE correspondant est un type étendu de MAC CE, et un MAC CE correspondant au sous-en-tête MAC PDU contenant les informations d'indication de type étendu MAC CE comprend un index de type MAC CE utilisé pour indiquer un type d'extension auquel appartient le MAC CE, et N est un entier supérieur ou égal à 1, l'index de type MAC CE indique de manière unique un type MAC CE ;
le procédé comprend également :
la détermination (S804) d'un type de MAC CE par le dispositif de réception en fonction des informations d'indication de type étendu MAC CE et de l'index de type MAC CE,
dans lequel le type étendu est un nouveau type MAC CE d'un système de communication de cinquième génération, autre que les types MAC CE dans un système d'évolution à long terme,
dans lequel les informations d'indication de type étendu MAC CE sont transportées dans un champ d'identité de canal logique, LCID, dans le sous-en-tête MAC PDU, et une valeur des informations d'indication de type étendu MAC CE est une valeur disponible dans une plage de valeurs d'une identité de type MAC CE.

6. Procédé selon la revendication 5, dans lequel la longueur de l'index de type MAC CE est de N octets, et N est un entier supérieur ou égal à 1 ; ou,
la longueur de l'index de type MAC CE est (N × 8-M) bits dans N octets, N est un entier supérieur ou égal à 1, M est un entier et 1≤M≤7.

7. Procédé selon la revendication 6, dans lequel, si l'index de type MAC CE est de (N×8-M) bits dans N octets, l'index de type MAC CE comprend des informations d'indication d'extension de longueur,
les informations d'indication d'extension de longueur occupent au moins un des bits restants des N octets, et les informations d'indication d'extension de longueur sont utilisées pour indiquer si une longueur de l'index de type MAC CE est étendue.

8. Procédé selon l'une quelconque des revendications 5 à 7, dans lequel la MAC PDU est mappée sur un canal partagé de liaison descendante pour la transmission, ou mappée sur un canal partagé de liaison montante pour la transmission.

9. Appareil de transmission d'une unité de données de protocole de contrôle d'accès au support (MAC PDU), comprenant :
un module de génération (901), configuré pour générer une PDU MAC par un dispositif d'envoi, dans lequel la PDU MAC comprend N éléments de contrôle d'accès au support, MAC CE, et N sous-en-têtes PDU MAC correspondant aux N MAC CE de manière biunivoque ; et,
un module d'envoi (902), configuré pour envoyer la PDU MAC par le dispositif d'envoi, dans lequel
au moins un sous-en-tête MAC PDU dans les N sous-en-têtes MAC PDU comprend des informations d'indication de type étendu MAC CE utilisées pour indiquer qu'un MAC CE correspondant est un type étendu de MAC CE, et un MAC CE correspondant au sous-en-tête MAC PDU contenant les informations d'indication de type étendu MAC CE comprend un index de type MAC CE utilisé pour indiquer un type d'extension auquel appartient le MAC CE, et N est un entier supérieur ou égal à 1, l'index de type MAC CE indique de manière unique un type MAC CE,
le type étendu est un nouveau type MAC CE d'un système de communication de cinquième génération, autre que les types MAC CE dans un système d'évolution à long terme,
dans lequel les informations d'indication de type étendu MAC CE sont transportées dans un champ d'identité de canal logique, LCID, dans le sous-en-tête MAC PDU, et une valeur des informations d'indication de type étendu MAC CE est une valeur disponible dans une plage de valeurs d'une identité de type MAC CE.

10. Appareil selon la revendication 9, dans lequel la longueur de l'index de type MAC CE est de N octets, et N est un entier supérieur ou égal à 1 ; ou,
la longueur de l'index de type MAC CE est (N × 8-M) bits dans N octets, N est un entier supérieur ou égal à 1, M est un entier et 1≤M≤7.

11. Appareil selon la revendication 10, dans lequel, si l'index de type MAC CE est de (N×8-M) bits dans N octets, l'index de type MAC CE comprend des informations d'indication d'extension de longueur,
les informations d'indication d'extension de longueur occupent au moins un des bits restants des N octets, et les informations d'indication d'extension de longueur sont utilisées pour indiquer si une longueur de l'index de type MAC CE est étendue.

12. Appareil de transmission d'une unité de données de protocole de contrôle d'accès au support (MAC PDU), comprenant :
un module de réception (1001), configuré pour recevoir une PDU MAC par un dispositif de réception, dans lequel la PDU MAC comprend N éléments de contrôle d'accès au support, MAC CE, et N sous-en-têtes PDU MAC correspondant aux N MAC CE de manière biunivoque, dans lequel
au moins un sous-en-tête MAC PDU dans les N sous-en-têtes MAC PDU comprend des informations d'indication de type étendu MAC CE utilisées pour indiquer qu'un MAC CE correspondant est un type étendu de MAC CE, et un MAC CE correspondant au sous-en-tête MAC PDU contenant les informations d'indication de type étendu MAC CE comprend un index de type MAC CE utilisé pour indiquer un type d'extension auquel appartient le MAC CE, et N est un entier supérieur ou égal à 1, l'index de type MAC CE indique de manière unique un type MAC CE ;
le procédé comprend également :
un module de détermination (1002), configuré pour déterminer un type de MAC CE par le dispositif de réception en fonction des informations d'indication de type étendu MAC CE et de l'index de type MAC CE,
le type étendu est un nouveau type MAC CE d'un système de communication de cinquième génération, autre que les types MAC CE dans un système d'évolution à long terme,
dans lequel les informations d'indication de type étendu MAC CE sont transportées dans un champ d'identité de canal logique, LCID, dans le sous-en-tête MAC PDU, et une valeur des informations d'indication de type étendu MAC CE est une valeur disponible dans une plage de valeurs d'une identité de type MAC CE.
